# EUROPEAN PATENT SPECIFICATION

(11) **EP 2 232 093 B1**
(45) Date of publication and mention of the grant of the patent: **01.09.2021**
(21) Application number: 07866801.9
(22) Date of filing: 13.12.2007
(51) Int. Cl.: F16D 65/12

(54) **BRAKING BAND OF A DISC FOR A BRAKE DISC, DISC OF A BRAKE DISC, AND METHOD OF MANUFACTURING THE SAME**
BREMSBAND EINER SCHEIBE FÜR EINE BREMSSCHEIBE, SCHEIBE EINER BREMSSCHEIBE UND VERFAHREN ZUR HERSTELLUNG DERSELBEN
BANDE DE FREINAGE D'UN DISQUE POUR UN DISQUE DE FREIN, DISQUE D'UN DISQUE DE FREIN, ET PROCÉDÉ DE FABRICATION DE CELUI-CI

(43) Date of publication of application: 29.09.2010
(73) Proprietor: BREMBO S.p.A., 24035 Curno (BERGAMO) (IT)
(72) Inventor: VASSALLI, Luca, I-24021 Albino Bergamo (IT); CERUTTI, Andrea, I-24041 Brembate Bergamo (IT); CASSOTTI, Giorgio, I-24048 Treviolo Bergamo (IT)
(74) Representative: Crippa, Paolo Ernesto
(86) International application number: PCT/IT2007/000869
(87) International publication number: WO 2009/075002

(56) References cited:
- EP-A- 0 770 791
- EP-A- 1 683 983
- WO-A-99/50109
- DE-A1- 4 002 695
- US-A- 6 131 707
- None

## Description

The present invention relates to a braking band of a disc for brake disc, as well as to a disc having a braking band of this type, and a method for manufacturing a braking band of this type.

In particular, the present invention relates to braking bands that are capable to minimize and eliminate the high-frequency noise, or squeal, generated during the braking action that is exerted thereon by pads housed in a caliper arranged astride of said band.

A braking band for motor vehicles is known from US-A-2002 040832, having a band height varying along the circumferential extension thereof, thanks to the band outer and inner edges which are wavy and specular in relation to a circumference with band average height. Similar solutions are shown in US-A-6 131 707, WO 99/50109, EP-A-0 770 791 and DE 40 02 695. A similar braking band is known from EP-A-1 596 088, further provided with windows arranged in a quincunx pattern and axially passing therethrough, forming large apertures in the braking surfaces thereof.

This known solution, although advantageous in many respects, is poorly adapted to applications on vehicles other than motorbikes or motorcycles, since the large windows drilled in the braking band considerably reduce the surface on which the pads act, for example, forcing to disc dimensions which do not fit in the respective openings obtained, for example, in the motor vehicles wheels.

A constant-height braking surface is known from WO-A-2007 082574, provided with band edges which are wavy and radially equally spaced along the circumferential extension thereof, so as to have a braking surface with a constant height.

These known solutions, although satisfying in many respects, do not allow completely eliminate the problem of the squeals which are generated by the braking band during the braking action which is exerted thereon by the opposed pads, which act on the opposing braking surfaces thereof.

In this condition, the problem underlying the present invention is to overcome the drawbacks of the to-date known prior art, by providing a braking band, and a brake disc comprising said band, which are able to obviate the drawbacks of the prior art.

A further task of the present invention is also a method for achieving a braking band able to obviate the drawbacks of the prior art.

These and other objects are achieved by a braking band according to claim 1, a brake disc according to claim 8, and a method according to claim 9.

Further embodiments of the invention are defined in the dependent claims.

With further advantage, radial recesses provided in the radially outer edges of the braking surfaces are present in the opposed braking surfaces and are angularly offset one to the other in a direction which is circumferential to the braking band, so as not to completely overlap each other in the axial direction.

Due to the provision of a radially inner braking surface edge being arranged on a circumference, and a radially outer edge having at least one radial recess towards the axis, the processing of these braking bands is made easier, while completely eliminating the annoying squeals which generate during the braking action.

With the embodiments set forth above and the exemplary embodiments set forth below, several advantages are achieved; for example, in particular:
1) A distribution variation of the pressure and friction forces which disturbs the pad movement, by bringing about an additional damping also, for example, in the disc plane.
2) In the high-frequency squeals generated by the band, a considerable vibration of the disc in its plane is detected which, thanks to the proposed solutions, is surprisingly obviated.
3) Thanks.to the proposed solutions, a modification of the mass distribution and stiffness in the braking band is induced, mainly located in the area next to the radially outer edge(s) thereof, thus achieving a higher disc stability.
4) In particular, it is further noted that:
   - the stiffness in the surface plane varies, creating regions in which the vibration in the plane increases;
   - the vibration modes of the band in the plane split in two and their extent decreases.

Advantageously, the at least one local decrease in the height of the at least one braking surface is achieved by means of a milling operation of its radially outer edge, for example, advantageously, through an axial feed of a hollow mill at least partially interfering with the braking band body in the proximity of the radially outer edge thereof.

The dimensioning of the millings which locally reduce the braking surface height of the braking band depends on:
- the pad length and height;
- the disc dimensions;
- the disc eigen modes which are involved during the squeal;
for example, so that at least one of the opposed pads is always involved by this at least one radial recess.

The technical features of the invention, in accordance with the above-mentioned objects, are traceable by the content of the claims, and the advantages thereof will be better appreciated from the following detailed description, given with reference to the annexed drawings, which illustrate a non-limitative, merely exemplary embodiment thereof, in which:
- Figure 1 shows an axonometric view on the wheel side of a disc having a braking band provided with rectilinear radial recesses on its outer edge;
- Figure 2 shows an axonometric view on the hub side of the disc in Figure 1;

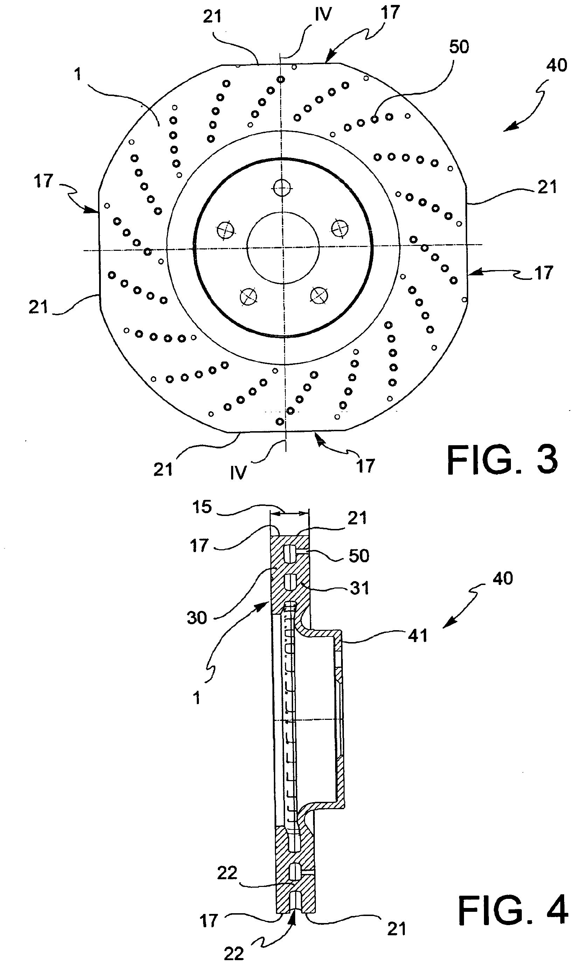

- Figure 3 illustrates a front view on the wheel side of a disc having a braking band provided with radial recesses on its outer edge, in particular levellings, and a plurality of drillings on at least one of the braking surfaces thereof;
- Figure 4 illustrates a sectional view along line IV - IV of the disc in Figure 3;

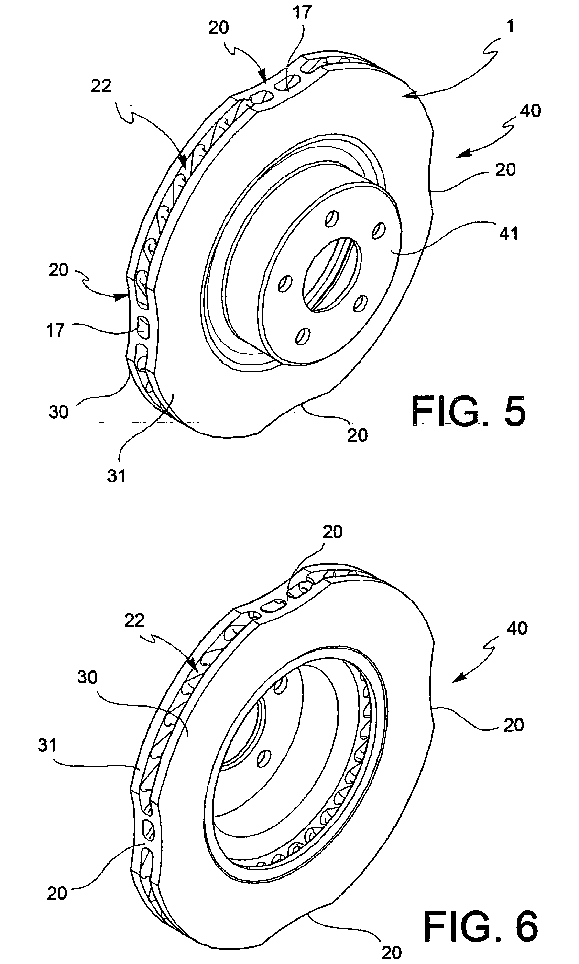

- Figure 5 shows an axonometric view on the wheel side of a disc having a braking band provided with arc-shaped radial recesses on its outer edge in accordance with an embodiment;
- Figure 6 shows an axonometric view on the hub side of the disc in Figure 5;

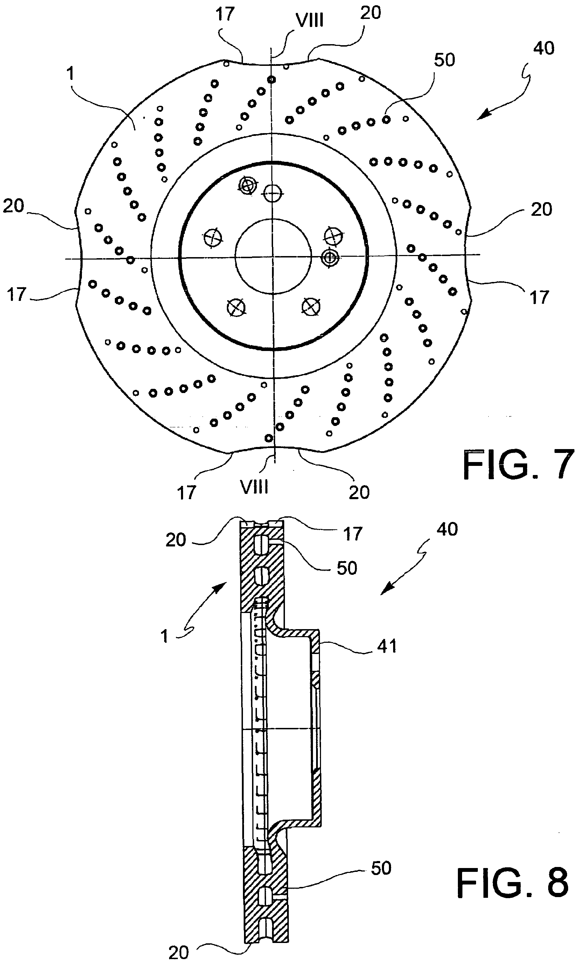

- Figure 7 illustrates a front view on the wheel side of a disc having a braking band provided with radial recesses on its outer edge, in particular arc-shaped recesses, and a plurality of drillings on at least one of the braking surfaces thereof;
- Figure 8 illustrates a sectional view along line VIII - VIII of the disc in Figure 7;

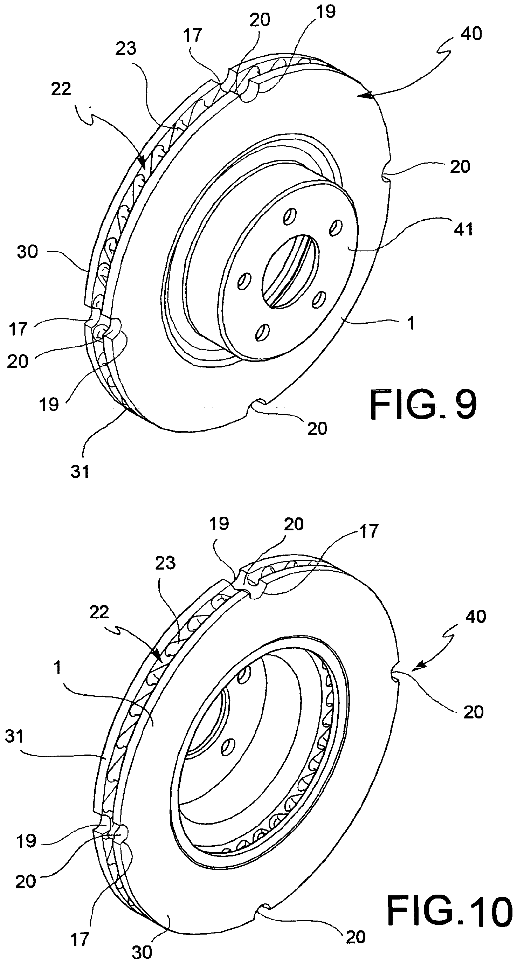

- Figure 9 shows an axonometric view on the wheel side of a disc having a braking band provided with arc-shaped radial recesses on its outer edge in accordance with an embodiment;
- Figure 10 shows an axonometric view on the hub side of the disc in Figure 9;

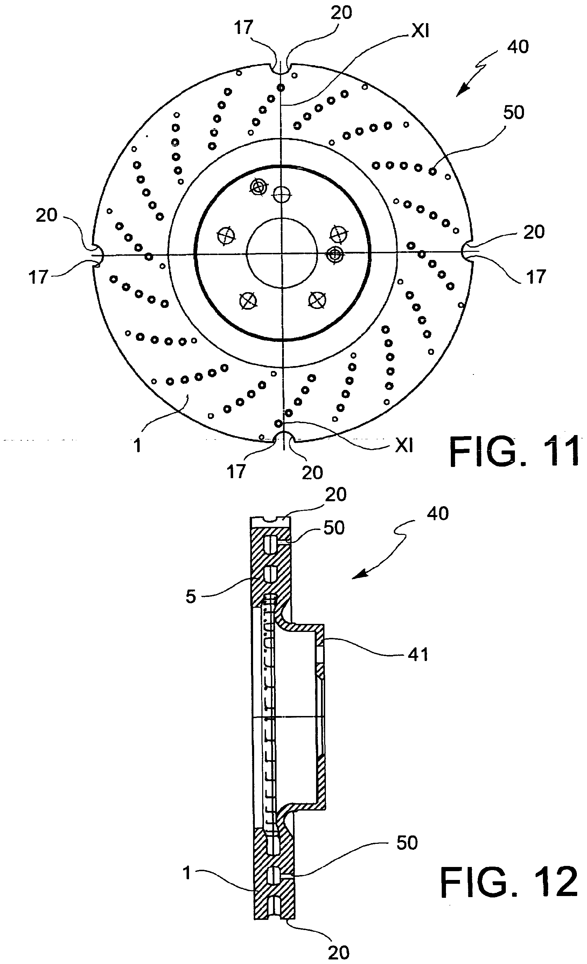

- Figure 11 illustrates a front view on the wheel side of a disc having a braking band provided with radial recesses on its outer edge, in particular arc-shaped recesses, and a plurality of drillings on at least one of the braking surfaces thereof;
- Figure 12 illustrates a sectional view along line XI - XI of the disc in Figure 11;
- Figure 13 shows an axonometric view on the wheel side of a disc having a braking band provided with grooved radial recesses on its outer edge arranged on a chord of a circumference centred on the rotation axis of the disc in accordance with an embodiment;
- Figure 14 shows an axonometric view on the hub side of the disc in Figure 13 in which the grooves are angularly offset in the circumferential direction in relation to those of the opposed braking surface visible in Figure 13;
- Figure 15 illustrates a front view on the wheel side of a ventilated disc having a braking band provided with radial recesses on its outer edge, in particular a levelling axially restrained only to the connection members of the two plates of the ventilated disc, and a plurality of drillings on at least one of the braking surfaces thereof;
- Figure 16 illustrates a sectional view along line XI - XI of the disc in Figure 14;
- Figure 17 shows an axonometric view on the wheel side of a disc having a braking band provided with radial recesses on its outer edge which are arc-shaped and angularly offset in the circumferential direction between the opposed braking surfaces, in accordance with the invention;
- Figure 18 shows an axonometric view on the hub side of the disc in Figure 17, in which the arc-shaped radial recesses are angularly offset in the circumferential direction in relation to those of the opposed braking surface seen in Figure 13;
- Figure 19 illustrates a front view on the wheel side of a disc having a braking band provided with radial recesses on its outer edge, in particular arc-shaped recesses, which is angularly offset in the circumferential direction between the opposed braking surfaces, and a plurality of drillings on at least one of the braking surfaces thereof;
- Figure 20 illustrates a sectional view along line XX - XX of the disc in Figure 19;
- Figure 21 shows an axonometric view on the wheel side of a disc having a braking band provided with grooved radial recesses on its outer edge arranged on a chord of a circumference centred on the rotation axis of the disc, in accordance with an embodiment;
- Figure 22 shows an axonometric view on the hub side of the disc in Figure 21;
- Figure 23 illustrates a front view on the wheel side of a disc having a braking band provided with radial recesses on its outer edge, in particular grooved recesses, arranged on a chord of a circumference centred on the rotation axis of the disc, and a plurality of drillings on at least one of the braking surfaces thereof;
- Figure 24 illustrates a sectional view along line XXIV - XXIV of the disc in Figure 23;
- Figure 25 shows an axonometric view on the wheel side of a disc having a braking band provided with grooved radial recesses on its outer edge which are closed at the ends thereof, so as not to emerge onto the outer edge, and arranged on a chord of a circumference centred on the rotation axis of the disc, in accordance with an embodiment;
- Figure 26 shows an axonometric view on the hub side of the disc in Figure 25;
- Figure 27 illustrates a front view on the wheel side of a disc having a braking band provided with radial recesses on its outer edge, in particular grooved recesses, which are closed at the ends thereof, so as not to emerge onto the outer edge, arranged on a chord of a circumference centred on the disc rotation axis, and a plurality of drillings on at least one of the braking surfaces thereof;
- Figure 28 illustrates a sectional view along line XXVIII - XXVIII of the disc in Figure 27;

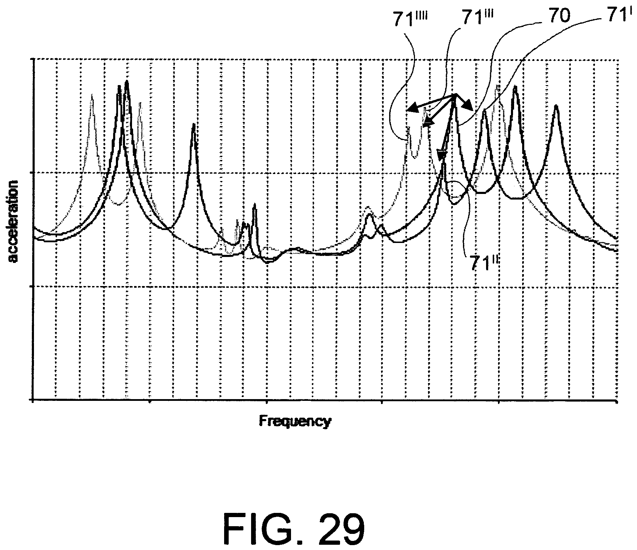

- Figure 29 shows the frequency response of a disc without radial recesses, a mode of which is indicated by the reference numeral 70, compared to the frequency response of the same disc provided with radial recesses having preset first dimensions, with corresponding modes which are split in two and having a reduced width with reference numerals 70' and 70", and compared to the frequency response of the same disc provided with radial recesses having preset second minor dimensions, with corresponding modes which are split in two and having a reduced width with reference numerals 70''' and 70'''',

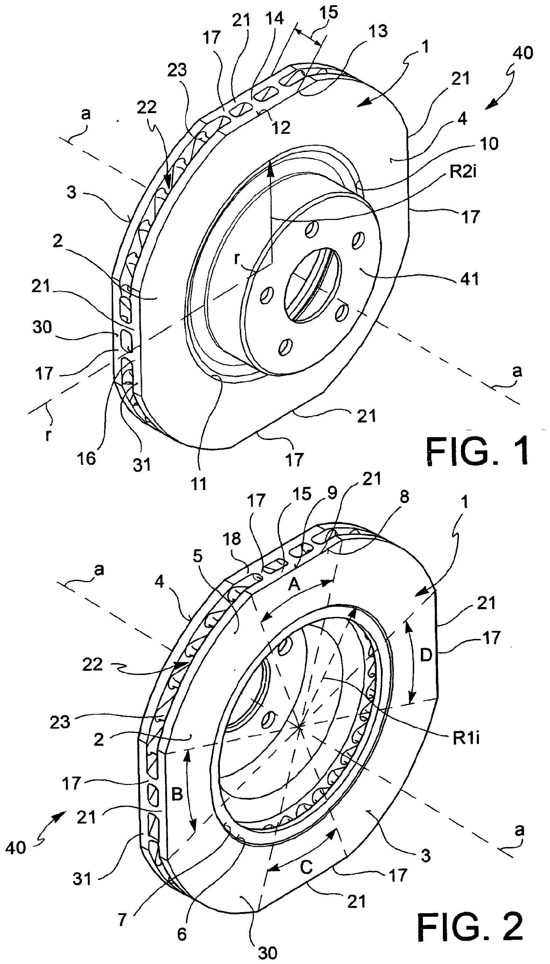

In accordance with a general embodiment, a braking band 1 of a disc for brake disc comprises a body 2 having a pre-established rotation axis "a". Said body has a pre-established extension in the axial "a-a" and radial "r-r" directions in relation to said rotation axis (Figure 1).

Advantageously, said body 2 is restrained in the axial direction by a first braking surface 3 adapted to be rubbed by a first brake pad, supported by a caliper constrained to the vehicle and arranged astride of said band, in order to exert a braking action on the vehicle.

A second braking surface 4, opposed to the first one in the axial direction, is adapted to be rubbed by a second brake pad, in order to exert a braking action on the vehicle.

Said opposed braking surfaces 3, 4 axially define a braking volume 5 of said body.

Advantageously, said first braking surface 3 comprises a first radially inner edge 6 which radially defines said surface on the rotation axis "a" side. Said first inner edge is inscribed by a first inner edge line 7 which is closed and lying on a circumference with radius "R1i" of a pre-established dimension.

Preferably, said first braking surface 3 comprises a first radially outer edge 8 which radially defines said surface on the opposed side to the rotation axis "a". Said first outer edge is circumscribed by a first outer edge line 9, which is, for example, closed.

Advantageously, said second braking surface 4 comprises a second radially inner edge 10 which radially defines said surface on the rotation axis "a" side. Said second inner edge is inscribed by a second inner edge line 11 which is closed and lying on a circumference with radius "R2i" of a pre-established dimension.

With particular advantage, said second braking surface comprises a second radially outer edge 12, which radially defines said surface on the opposed side to the rotation axis "a"; said second outer edge being circumscribed by a second outer edge line 13, which is, for example, closed.

Preferably, said first and second outer edges are parts of a disc outer edge 14 which radially defines said disc on the opposed side to said rotation axis "a".

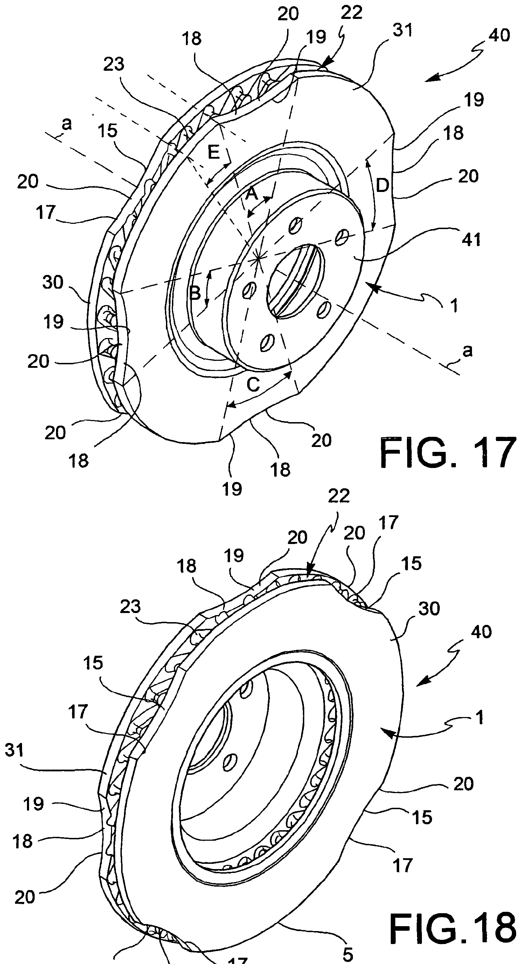

In accordance with an embodiment, at least one axial portion 15 of said disc outer edge 14 is circumscribed by a disc edge line 16, which is, for example, closed, and comprises at least one angular portion A, B, C, D, which is radially recessed towards the rotation axis "a" to form an edge outer recess 17 entering said braking volume 5 (for example, Figure 2 or Figure 17).

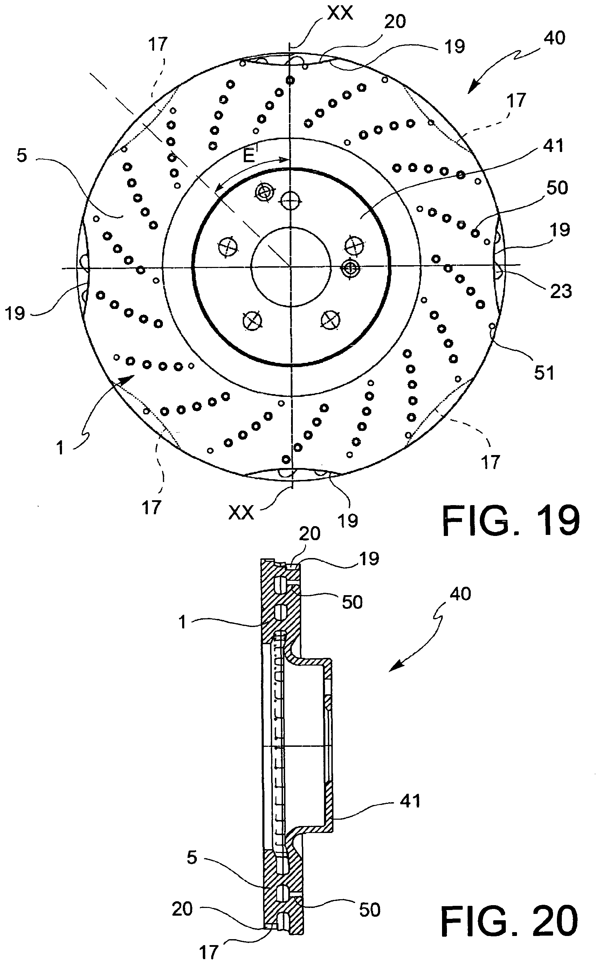

In accordance with a further embodiment, said at least one axial portion 15 of said disc outer edge consists in at least two axial portions of disc outer edge 15, 18, each forming at least one outer edge recess 17, 19 (Figures 17, 18, 19, 20).

Advantageously, said two axial portions of disc outer edge 15, 18 are axially spaced apart from each other, each forming at least one outer edge recess 17, 19.

In accordance with the invention, said at least one outer edge recess 17, 19 of said at least two outer edge axial portions 15, 18 are angularly spaced apart from each other "E" in the circumferential direction.

In accordance with a still further embodiment, said disc edge line 16 comprises circumference lengths centred on the disc body axis, and concavity towards the axis, and at least one circumference length 20 of opposed concavity, said edge line changing from convex to concave, and forming said at least one outer edge recess 17 and/or 19.

In accordance with an embodiment, said disc edge line 16 comprises circumference lengths that are centred on the disc body axis and concavity towards the axis, and at least one rectilinear length 21 lying on a straight line and forming said at least one outer edge recess.

Advantageously, said straight line which said rectilinear length 21 lays on forms a chord on a circumference transversal to the rotation axis "a" and centred on said rotation axis.

In accordance with an embodiment, said disc outer edge 14 circumscribed by said disc edge line 16 comprises at least two outer edge recesses 17 entering said braking volume 5.

Advantageously, said at least two recesses 17 are equally spaced from each other.

In accordance with an embodiment, said at least one outer recess 17, 19 is provided on said first or second lines of first or second outer edges 9, 13 of said first or second braking surfaces 3, 4.

In accordance with an embodiment, said band 1 is a ventilated braking band and comprises two plates 30, 31, the gap between the plates defining a ventilation duct 22, said plates being connected by connection means 23 passing through said ventilation duct 22.

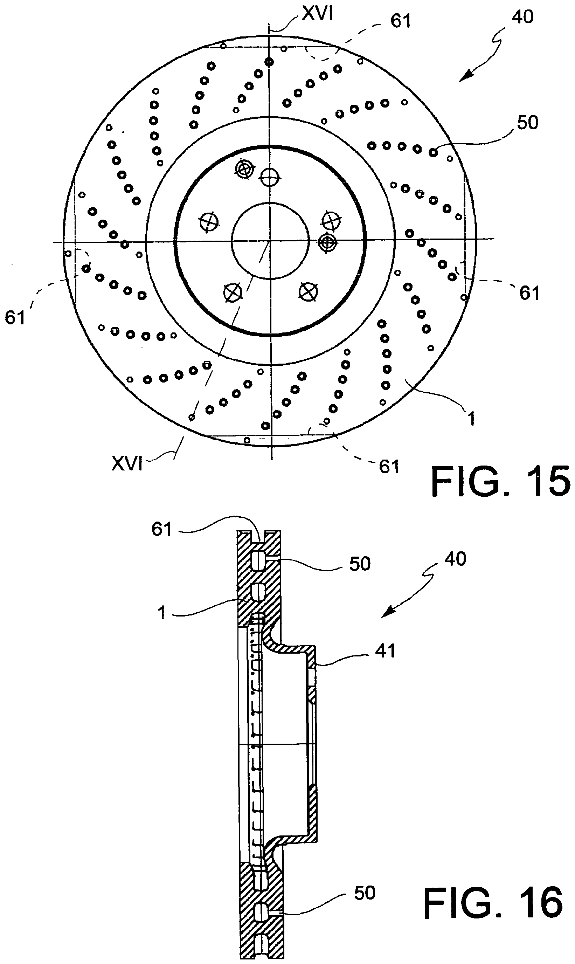

Advantageously, said at least one outer recess 61 only involves said connection means 23 (Figures 15 and 16), for example, said radial recesses are formed by levelling of the connection means, advantageously according to a chord at a circumference centred on the band rotation axis.

In accordance with an embodiment, said connection means 23 are extended members or fins connecting the two plates in an essentially radial direction.

In accordance with a further embodiment, said connection means are pillar members or pins which locally connect the two plates 30, 31 to each other.

In accordance with an advantageous embodiment, said at least one outer recess 35, 36 only involves the radially outer edge 8, 12 of at least one plate 30 or 31 of the ventilated band (Figures 17 to 20).

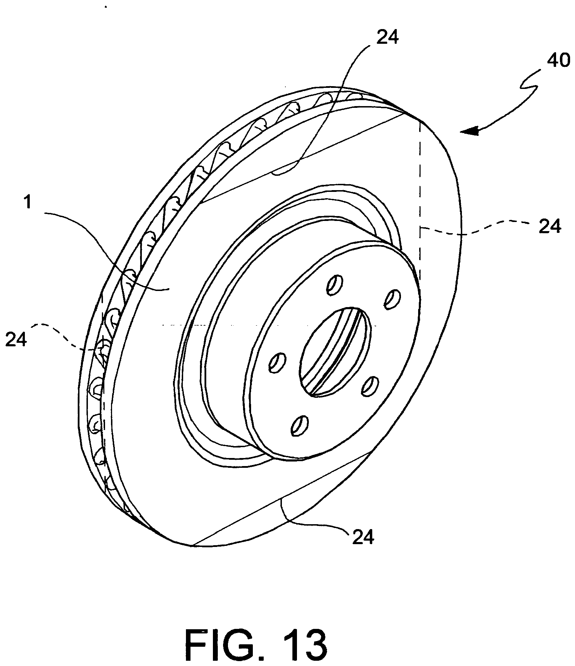

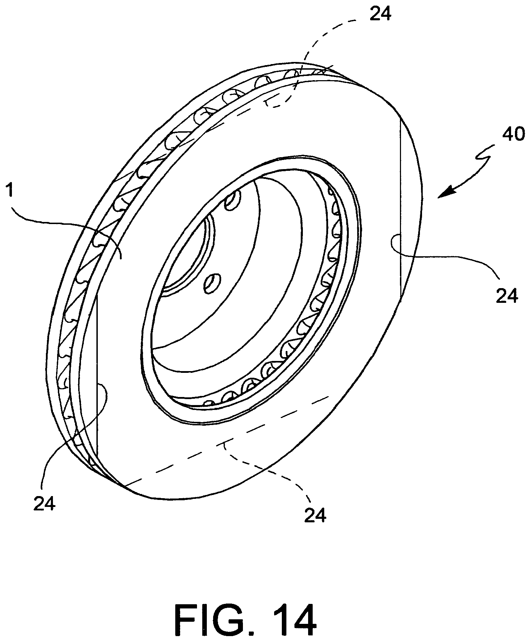

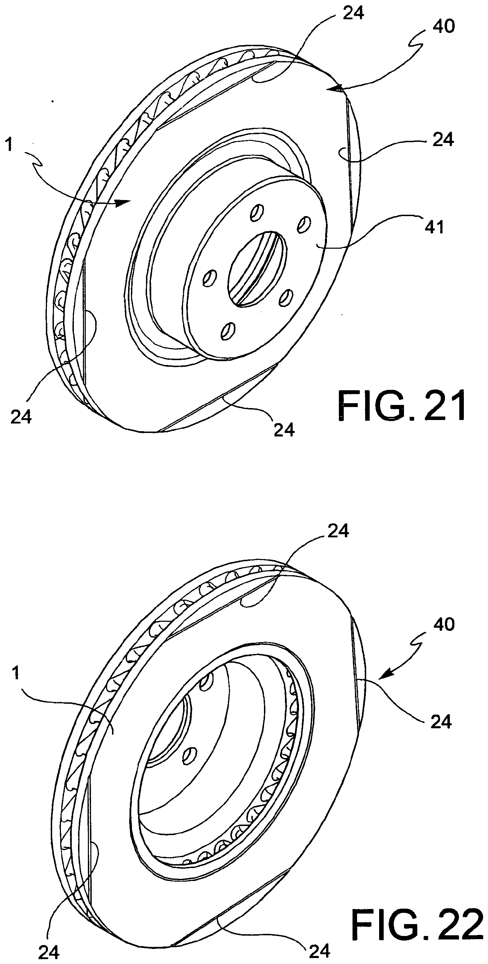

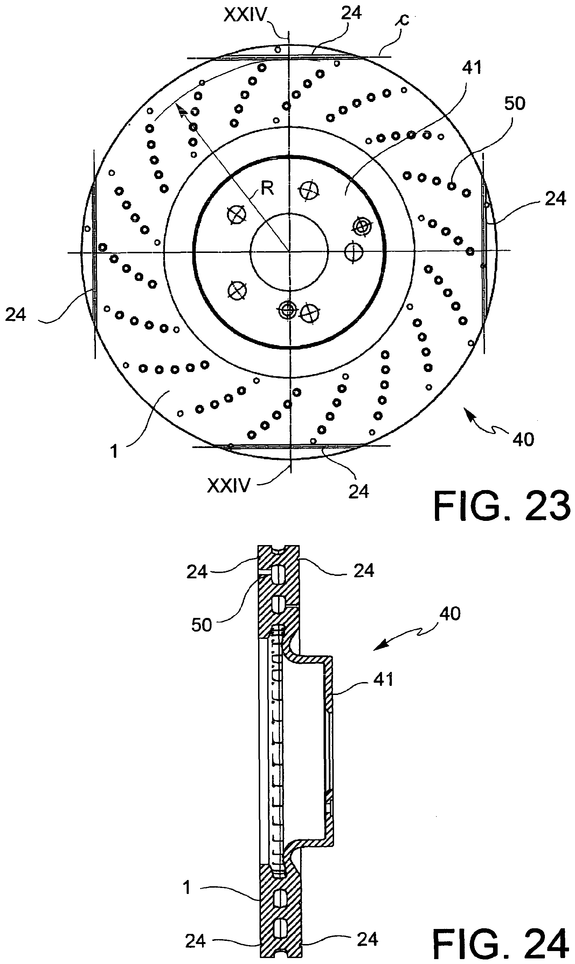

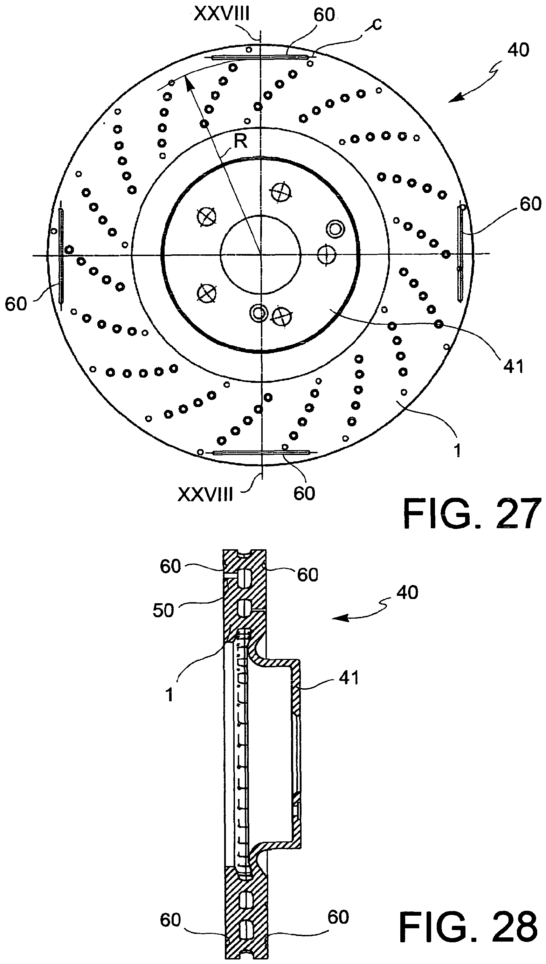

In accordance with an embodiment, said at least one axial portion 15, 18 of said disc outer edge 14 only partially involves the axial thickness of said disc body and, by being recessed in said braking volume 5 delimited by said braking surfaces 3, 4, it forms at least one groove 24 which at least partially splits at least one of said braking surfaces 3 and/or 4 (Figures 13, 14, 21, 22, 23, 24, 25, 26, 27, 28).

Advantageously, said groove 24 comprises at least one rectilinear portion.

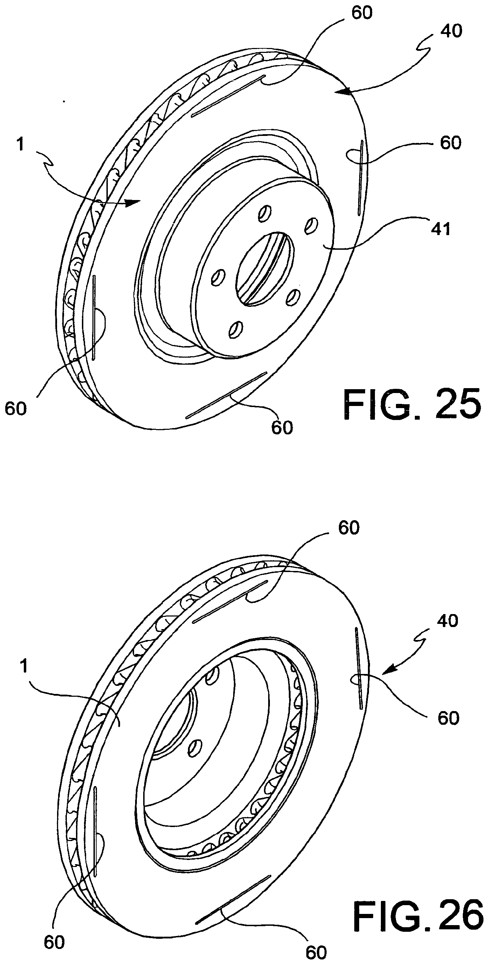

With further advantage, said groove 60 is closed at the ends thereof, and is not joined to the radially outer edge 8 and/or 12 of the braking surface (Figures 25 to 28).

In accordance with an embodiment, said radial outer recess is achieved with at least one groove drilled on at least one braking surface that is arranged on a chord of a circumference centred on the band surface axis. This at least one groove only very slightly reduces the braking surface extension, affecting the vibration modes of the braking band and eliminating the squeal generated during the braking action, but it does not considerably modify the surface which the braking pads act on.

In accordance with an embodiment, the braking band has at least one window or hole on at least one of the braking surfaces, for example blind or through windows or holes and, for example, a plurality of windows or holes.

In accordance with an embodiment, a braking band provided with opposed braking surfaces comprises radial recesses on the outer edges of said braking surfaces, and the radial recesses of a first braking surface are angularly offset in the circumferential direction in relation to the radial recesses of the opposed braking surface.

In accordance with an embodiment, a braking band provided with opposed braking surfaces comprises grooves lying on chords of circumferences centred on a band rotation axis and debouching on the outer edges of said braking surfaces, and the grooves of a first braking surface are angularly offset in the circumferential direction in relation to the grooves of the opposed braking surface.

In accordance with an embodiment, a brake disc 40 of brake disc comprises a braking band 1 according to any one of the previously-described embodiments.

In accordance with an embodiment, said disc 40 comprises a connecting bell 41 of said disc at a wheel hub of a vehicle suspension. Advantageously, said bell 41 is integral to said disc 40.

Some exemplary manufacturing methods for a braking band 1 and a disc 40 as previously described will be described below.

In accordance with an embodiment, a method for manufacturing a braking band 1 comprises the following steps:
- providing a body 2 having a pre-established rotation axis "a", said body having an extension in the axial and radial directions "r-r" to said rotation axis;
- restraining said body in the axial direction by means of a first braking surface 3 adapted to be rubbed by a brake pad, in order to exert a braking action on a vehicle; and
- restraining said body in the axial direction by means of a second braking surface 4, opposed to the first one in the axial direction, and adapted to be rubbed by a brake pad, in order to exert a braking action on a vehicle;
- axially restraining a braking volume 5 of said body by means of said opposed braking surfaces 3, 4;
- creating a first radially inner edge 6 in said first braking surface which radially defines said surface on the rotation axis side, said first inner edge being inscribed by a first inner edge line 7 which is closed and lying on a circumference with radius "R1i" of a pre-established dimension;
- creating a first radially outer edge 8 in said first braking surface which radially defines said surface on the opposed side to the rotation axis, said first outer edge being circumscribed by a first outer edge line 9;
- creating a second radially inner edge 10 in said second braking surface which radially defines said surface on the rotation axis side, said second inner edge being inscribed by a second inner edge line 11 which is closed and lying on a circumference with radius "R2i" of a pre-established dimension;
- creating a second radially outer edge 12 in said second braking surface which radially defines said surface on the opposed side to the rotation axis, said second outer edge being circumscribed by a second outer edge line 13;
- creating a disc outer edge 14 which radially defines said disc on the opposed side to said rotation axis comprising said first and second outer edges 8, 12;
- creating in at least one axial portion 15 of said disc outer edge 14, circumscribed by a disc edge line 16, at least one angular portion A, B, C, D which is radially recessed towards the rotation axis "a" to form an edge outer recess 17 entering said braking volume 5.

In accordance with a particular embodiment of the method, said radial recess is achieved by milling.

With further advantage, said radial recess is achieved by levelling.

In accordance with a particular embodiment of the method, at least two axial portions of disc outer edge 15, 18 are created, each forming at least one outer edge recess 17, 19.

Advantageously, said two axial portions of disc outer edge 15, 18 are created axially spaced apart from each other, each forming at least one outer edge recess 17, 19.

According to the invention, said at least one outer edge recess 17, 19 of said at least two outer edge axial portions are respectively created angularly spaced apart from each other E or E' in the circumferential direction.

It should be understood that the solution may take, in its practical implementation, also forms and configurations other than the one set forth above, without however departing from the present scope of protection s defined by the appended claims. Furthermore, all the details may be replaced by technically equivalent elements, and the forms, dimensions, and materials employed may be any, according to the requirements.

## Claims

1. A braking band (1) of a disc for brake disc comprising:
- a body (2) having a pre-established rotation axis (a), said body having an extension in the axial and radial directions in relation to said rotation axis;
- said body being restrained in the axial direction by a first braking surface (3) adapted to be rubbed by a brake pad, in order to exert a braking action on a vehicle; and
- a second braking surface (4), opposed to the first one in the axial direction, and adapted to be rubbed by a brake pad, in order to exert a braking action on a vehicle;
- said opposed braking surfaces (3, 4) axially define a braking volume (5) of said body;
- said first braking surface comprising a first radially inner edge (6) which radially defines said surface on the rotation axis side, said first inner edge being inscribed by a first inner edge line (7) which is closed and lying on a circumference with radius (R1i) of a pre-established dimension;
- said first braking surface comprising a first radially outer edge (8) which radially defines said surface on the opposed side to the rotation axis, said first outer edge being circumscribed by a closed first outer edge line (9);
- said second braking surface comprising a second radially inner edge (10) which radially defines said surface on the rotation axis side, said second inner edge being inscribed by a second inner edge line (11) which is closed and lying on a circumference with radius (R2i) of a pre-established dimension;
- said second braking surface comprising a second radially outer edge (12) which radially defines said surface on the opposed side to the rotation axis, said second outer edge being circumscribed by a closed second outer edge line (13) ;
- said first and second outer edges being parts of a disc outer edge (14) which radially defines said disc on the opposed side to said rotation axis;
- at least one axial portion (15) of said disc outer edge being circumscribed by a closed disc edge line (16) comprising at least one angular portion (A, B, C, D) which is radially recessed towards the rotation axis to form an edge outer recess (17) entering said braking volume;
- said at least one axial portion consists in at least two axial portions of disc outer edge (15, 18), each forming at least one outer edge recess (17, 19);
wherein
- said two axial portions of disc outer edge (15, 18) are axially spaced apart from each other;
**characterized by** the fact that
the outer edge recesses (17, 19) provided in the radially outer edges of the braking surfaces (3, 4) are present in the opposed braking surfaces (3, 4) and are angularly offset one to the other in a circumferential direction to the braking band, so as not to completely overlap each other in the axial direction.

2. The braking band according to claim 1, wherein said at least one outer edge recess (17, 19) of said at least two outer edge axial portions are four in number and 90DEG angularly spaced apart from each other (E).

3. The braking band according to claim 1, wherein said disc edge line (16) comprises circumference lengths that are centred on the disc body axis and concavity towards the axis, and at least one rectilinear length (21) lying on a straight line and forming said at least one outer edge recess and
wherein said straight line, which said rectilinear length (21) lies on, forms a chord at a circumference transversal to the rotation axis (a) centred on said rotation axis.

4. The braking band according to any preceding claim, wherein said disc outer edge circumscribed by said closed disc edge line (16) comprises at least two edge outer recesses entering said braking volume.

5. The braking band according to claim 4, wherein said at least two recesses are equally spaced from each other.

6. The braking band according to any preceding claim, wherein said at least one outer recess is provided on said first or second lines of first or second outer edges of said first or second braking surfaces.

7. The braking band according to any preceding claim, wherein said surface comprises two plates, the gap between the plates defining a ventilation duct (22), said plates being connected by connection means (23) passing through said ventilation duct and wherein said at least one outer recess only involves the radially outer edge of at least one plate.

8. A braking disc of a brake disc comprising a braking band according to any preceding claim and comprising a connecting bell of said disc to a wheel hub of a vehicle suspension, wherein said bell is integral to said disc.

9. A method for manufacturing a braking band, comprising the following steps:
- providing a body (2) having a pre-established rotation axis (a), said body having an extension in the axial and radial directions to said rotation axis;
- restraining said body in the axial direction by means of a first braking surface (3) adapted to be rubbed by a brake pad, in order to exert a braking action on a vehicle and
- restraining said body in the axial direction by means of a second braking surface (4), opposed to the first one in the axial direction, and adapted to be rubbed by a brake pad, in order to exert a braking action on a vehicle;
- axially restraining a braking volume (5) of said body by means of said opposed braking surfaces (3, 4);
- creating a first radially inner edge (6) in said first braking surface which radially defines said surface on the rotation axis side, said first inner edge being inscribed by a first inner edge line (7) which is closed and lying on a circumference with radius (R1i) of a pre-established dimension;
- creating a first radially outer edge (8) in said first braking surface which radially defines said surface on the opposed side to the rotation axis, said first outer edge being circumscribed by a closed first outer edge line (9);
- creating a second radially inner edge (10) in said second braking surface which radially defines said surface on the rotation axis side, said second inner edge being inscribed by a second inner edge line (11) which is closed and lying on a circumference with radius (R2i) of a pre-established dimension;
- creating a second radially outer edge (12) in said second braking surface which radially defines said surface on the opposed side to the rotation axis, said second outer edge being circumscribed by a closed second outer edge line (13) ;
- creating a disc outer edge (14) which radially defines said disc on the opposed side to said rotation axis comprising said first and second outer edges;
- creating, in at least one axial portion (15) of said disc outer edge, circumscribed by a closed disc edge line (16), at least one angular portion (A, B, C, D) which is radially recessed towards the rotation axis to form an edge outer recess (17) entering said braking volume;
- at least two axial portions of disc outer edge (15, 18) are created, each forming at least one outer edge recess (17, 19);
- said two axial portions of disc outer edge (15, 18) are created axially spaced apart from each other;
**characterized in that** it comprises the further step of:
the outer edge recesses (17, 19) provided in the radially outer edges of the braking surfaces (3, 4) are created in the opposed braking surfaces (3, 4) and are created angularly offset one to the other in a circumferential direction to the braking band, so as not to completely overlap each other in the axial direction.

10. The method according to claim 9, wherein said radial recess is achieved by milling.

11. The method according to the claim 9 or 10, wherein said braking band is ventilated in at least one of the braking surfaces thereof, drilling at least one blind or through hole in said at least one braking surface.

12. The method according to claim 9, wherein said radial recess is achieved by levelling.

## Patentansprüche

1. Bremsband (1) einer Scheibe für eine Bremsscheibe, umfassend:
- einen Körper (2), welcher eine vorbestimmte Rotationsachse (a) aufweist, wobei der Körper in Bezug auf die Rotationsachse eine Ausdehnung in der axialen und der radialen Richtung aufweist;
- wobei der Körper in der axialen Richtung durch eine erste Bremsfläche (3) beschränkt ist, welche dazu eingerichtet ist, durch einen Bremsbelag gerieben zu werden, um eine Bremswirkung auf ein Fahrzeug auszuüben; und
- eine zweite Bremsfläche (4), welche der ersten in der axialen Richtung entgegengesetzt ist und dazu eingerichtet ist, durch einen Bremsbelag gerieben zu werden, um eine Bremswirkung auf ein Fahrzeug auszuüben;
- wobei die entgegengesetzten Bremsflächen (3, 4) axial ein Bremsvolumen (5) des Körpers definieren;
- wobei die erste Bremsfläche einen ersten radial inneren Rand (6) umfasst, welcher radial die Fläche an der Seite der Rotationsachse definiert, wobei der erste innere Rand durch eine erste innere Randlinie (7) eingeschrieben ist, welche geschlossen ist und auf einem Umfang mit einem Radius (R1i) einer vorbestimmten Abmessung liegt;
- wobei die erste Bremsfläche einen ersten radial äußeren Rand (8) umfasst, welcher radial die Fläche an der zu der Rotationsachse entgegengesetzten Seite definiert, wobei der erste äußere Rand durch eine geschlossene erste äußere Randlinie (9) umschlossen ist;
- wobei die zweite Bremsfläche einen zweiten radial inneren Rand (10) umfasst, welcher radial die Fläche an der Seite der Rotationsachse definiert, wobei der zweite innere Rand durch eine zweite innere Randlinie (11) eingeschrieben ist, welche geschlossen ist und auf einem Umfang mit einem Radius (R2i) einer vorbestimmten Abmessung liegt;
- wobei die zweite Bremsfläche einen zweiten radial äußeren Rand (12) umfasst, welcher radial die Fläche an der zu der Rotationsachse entgegengesetzten Seite definiert, wobei der zweite äußere Rand durch eine geschlossene zweite äußere Randlinie (13) umschlossen ist;
- wobei der erste und der zweite äußere Rand Teile eines Scheibenaußenrands (14) sind, welcher radial die Scheibe an der zu der Rotationsachse entgegengesetzten Seite definiert;
- wobei wenigstens ein axialer Abschnitt (15) des Scheibenaußenrands durch eine geschlossene Scheibenrandlinie (16) umschlossen ist, umfassend wenigstens einen Winkelabschnitt (A, B, C, D), welcher radial in Richtung der Rotationsachse ausgespart ist, um eine Außenrandaussparung (17) zu bilden, welche in das Bremsvolumen eintritt;
- wobei der wenigstens eine axiale Abschnitt aus wenigstens zwei axialen Abschnitten eines Scheibenaußenrands (15, 18) besteht, welche jeweils wenigstens eine Außenrandaussparung (17, 19) bilden;
wobei
- die zwei axialen Abschnitte des Scheibenaußenrands (15, 18) axial voneinander beabstandet sind;
**gekennzeichnet durch** die Tatsache, dass
die Außenrandaussparungen (17, 19), welche in den radial äußeren Rändern der Bremsflächen (3, 4) bereitgestellt sind, in den entgegengesetzten Bremsflächen (3, 4) vorhanden sind und winkelmäßig eine zu der anderen in einer Umfangsrichtung zu dem Bremsband versetzt sind, so dass sie einander in der axialen Richtung nicht vollständig überlappen.

2. Bremsband nach Anspruch 1, wobei die wenigstens eine Außenrandaussparung (17, 19) der wenigstens zwei axialen Außenrandabschnitte in einer Anzahl vier sind und winkelmäßig um 90 Grad voneinander beabstandet sind (E).

3. Bremsband nach Anspruch 1, wobei die Scheibenrandlinie (16) Umfangslängen, welche an der Scheibenkörperachse zentriert sind, und eine Konkavität in Richtung der Achse umfasst und wobei wenigstens eine geradlinige Länge (21) auf einer geraden Linie liegt und die wenigstens eine Außenrandaussparung bildet und
wobei die gerade Linie, auf welcher die geradlinige Länge (21) liegt, an einem zu der Rotationsachse (a) transversalen Umfang, welcher an der Rotationsachse zentriert ist, eine Kreissehne bildet.

4. Bremsband nach einem vorhergehenden Anspruch, wobei der Scheibenaußenrand, welcher durch die geschlossene Scheibenrandlinie (16) umschlossen ist, wenigstens zwei Randaußenaussparungen umfasst, welche in das Bremsvolumen eintreten.

5. Bremsband nach Anspruch 4, wobei die wenigstens zwei Aussparungen gleichmäßig voneinander beabstandet sind.

6. Bremsband nach einem vorhergehenden Anspruch, wobei die wenigstens eine äußere Aussparung an der ersten oder der zweiten Linie des ersten oder des zweiten äußeren Rands der ersten oder der zweiten Bremsfläche bereitgestellt ist.

7. Bremsband nach einem vorhergehenden Anspruch, wobei die Fläche zwei Platten umfasst, wobei der Spalt zwischen den Platten einen Belüftungskanal (22) definiert, wobei die Platten durch Verbindungsmittel (23) verbunden sind, welche durch den Belüftungskanal verlaufen, und wobei die wenigstens eine äußere Aussparung nur den radial äußeren Rand wenigstens einer Platte einbezieht.

8. Bremsende Scheibe einer Bremsscheibe, umfassend ein Bremsband nach einem vorhergehenden Anspruch und umfassend eine Verbindungsglocke der Scheibe zu einer Radnabe einer Fahrzeugaufhängung, wobei die Glocke integral mit der Scheibe vorliegt.

9. Verfahren zur Herstellung eines Bremsbands, umfassend die folgenden Schritte:
- Bereitstellen eines Körpers (2), welcher eine vorbestimmte Rotationsachse (a) aufweist, wobei der Körper in Bezug auf die Rotationsachse eine Ausdehnung in der axialen und der radialen Richtung aufweist;
- Beschränken des Körpers in der axialen Richtung mittels einer ersten Bremsfläche (3), welche dazu eingerichtet ist, durch einen Bremsbelag gerieben zu werden, um eine Bremswirkung auf ein Fahrzeug auszuüben; und
- Beschränken des Körpers in der axialen Richtung mittels einer zweiten Bremsfläche (4), welche der ersten in der axialen Richtung entgegengesetzt ist und dazu eingerichtet ist, durch einen Bremsbelag gerieben zu werden, um eine Bremswirkung auf ein Fahrzeug auszuüben;
- axial Beschränken eines Bremsvolumens (5) des Körpers mittels der entgegengesetzten Bremsflächen (3, 4);
- Schaffen eines ersten radial inneren Rands (6) in der ersten Bremsfläche, welcher radial die Fläche an der Seite der Rotationsachse definiert, wobei der erste innere Rand durch eine erste innere Randlinie (7) eingeschrieben ist, welche geschlossen ist und auf einem Umfang mit einem Radius (R1i) einer vorbestimmten Abmessung liegt;
- Schaffen eines ersten radial äußeren Rands (8) in der ersten Bremsfläche, welcher radial die Fläche an der zu der Rotationsachse entgegengesetzten Seite definiert, wobei der erste äußere Rand durch eine geschlossene erste äußere Randlinie (9) umschlossen ist;
- Schaffen eines zweiten radial inneren Rands (10) in der zweiten Bremsfläche, welcher radial die Fläche an der Seite der Rotationsachse definiert, wobei der zweite innere Rand durch eine zweite innere Randlinie (11) eingeschrieben ist, welche geschlossen ist und auf einem Umfang mit einem Radius (R2i) einer vorbestimmten Abmessung liegt;
- Schaffen eines zweiten radial äußeren Rands (12) in der zweiten Bremsfläche, welcher radial die Fläche an der zu der Rotationsachse entgegengesetzten Seite definiert, wobei der zweite äußere Rand durch eine geschlossene zweite äußere Randlinie (13) umschlossen ist;
- Schaffen eines Scheibenaußenrands (14), welcher radial die Scheibe an der zu der Rotationsachse entgegengesetzten Seite definiert, umfassend den ersten und den zweiten äußeren Rand;
- Schaffen in wenigstens einem axialen Abschnitt (15) des Scheibenaußenrands, welcher durch eine geschlossene Scheibenrandlinie (16) umschlossen ist, wenigstens eines Winkelabschnitts (A, B, C, D), welcher radial in Richtung der Rotationsachse ausgespart ist, um eine Außenrandaussparung (17) zu bilden, welche in das Bremsvolumen eintritt;
- wenigstens zwei axiale Abschnitte eines Scheibenaußenrands (15, 18) werden geschaffen, welche jeweils wenigstens eine Außenrandaussparung (17, 19) bilden;
- die zwei axialen Abschnitte des Scheibenaußenrands (15, 18) werden axial voneinander beabstandet geschaffen;
**dadurch gekennzeichnet, dass** es ferner den folgenden Schritt umfasst:
die Außenrandaussparungen (17, 19), welche in den radial äußeren Rändern der Bremsflächen (3, 4) bereitgestellt sind, werden in den entgegengesetzten Bremsflächen (3, 4) geschaffen und werden winkelmäßig eine zu der anderen in einer Umfangsrichtung zu dem Bremsband versetzt geschaffen, so dass sie einander in der axialen Richtung nicht vollständig überlappen.

10. Verfahren nach Anspruch 9, wobei die radiale Aussparung durch Fräsen erreicht wird.

11. Verfahren nach Anspruch 9 oder 10, wobei das Bremsband in wenigstens einer der Bremsflächen davon belüftet wird, indem wenigstens ein Sack- oder Durchgangsloch in die wenigstens eine Bremsfläche gebohrt wird.

12. Verfahren nach Anspruch 9, wobei die radiale Aussparung durch Nivellieren erreicht wird.

## Revendications

1. Bande de freinage (1) d'un disque pour disque de frein comprenant :
- un corps (2) présentant un axe de rotation (a) préétabli, ledit corps présentant une extension dans les directions axiale et radiale par rapport audit axe de rotation ;
- ledit corps étant retenu dans la direction axiale par une première surface de freinage (3) adaptée pour être frottée par une plaquette de frein, afin d'exercer une action de freinage sur un véhicule ; et
- une seconde surface de freinage (4), opposée à la première dans la direction axiale, et adaptée pour être frottée par une plaquette de frein, afin d'exercer une action de freinage sur un véhicule ;
- lesdites surfaces de freinage (3, 4) opposées définissent axialement un volume de freinage (5) dudit corps ;
- ladite première surface de freinage comprenant un premier bord radialement interne (6) qui définit radialement ladite surface sur le côté d'axe de rotation, ledit premier bord interne étant inscrit par une première ligne de bord interne (7) qui est fermée et reposant sur une circonférence avec un rayon (R1i) d'une dimension préétablie ;
- ladite première surface de freinage comprenant un premier bord radialement externe (8) qui définit radialement ladite surface sur le côté opposé à l'axe de rotation, ledit premier bord externe étant circonscrit par une première ligne de bord externe (9) fermée ;
- ladite seconde surface de freinage comprenant un second bord radialement interne (10) qui définit radialement ladite surface sur le côté d'axe de rotation, ledit second bord interne étant inscrit par une seconde ligne de bord interne (11) qui est fermée et reposant sur une circonférence avec un rayon (R2i) d'une dimension préétablie ;
- ladite seconde surface de freinage comprenant un second bord radialement externe (12) qui définit radialement ladite surface sur le côté opposé à l'axe de rotation, ledit second bord externe étant circonscrit par une seconde ligne de bord externe (13) fermée,
- lesdits premier et second bords externes étant des parties d'un bord externe de disque (14) qui définit radialement ledit disque sur le côté opposé audit axe de rotation ;
- au moins une partie axiale (15) dudit bord externe de disque étant circonscrite par une ligne de bord de disque (16) fermée comprenant au moins une partie angulaire (A, B, C, D) qui est évidée radialement en direction de l'axe de rotation pour former un évidement externe de bord (17) entrant dans ledit volume de freinage ;
- ladite au moins une partie axiale consiste en au moins deux parties axiales de bord externe de disque (15, 18), chacune formant au moins un évidement de bord externe (17, 19) ;
dans laquelle
- lesdites deux parties axiales de bord externe de disque (15, 18) sont espacées axialement l'une de l'autre ;
**caractérisée par le fait que**
les évidements de bord externe (17, 19) prévus dans les bords radialement externes des surfaces de freinage (3, 4) sont présents dans les surfaces de freinage (3, 4) opposées et sont décalés angulairement l'un de l'autre dans une direction circonférentielle par rapport à la bande de freinage, de manière à ne pas se chevaucher complètement mutuellement dans la direction axiale.

2. Bande de freinage selon la revendication 1, dans laquelle ledit au moins un évidement de bord externe (17, 19) desdites au moins deux parties axiales de bord externe sont au nombre de quatre et espacés angulairement les uns des autres de 90 degrés (E).

3. Bande de freinage selon la revendication 1, dans laquelle ladite ligne de bord de disque (16) comprend des longueurs de circonférence qui sont centrées sur l'axe de corps de disque et une concavité en direction de l'axe, et au moins une longueur rectiligne (21) reposant sur une ligne droite et formant ledit au moins un évidement de bord externe et
dans laquelle ladite ligne droite, sur laquelle ladite longueur rectiligne (21) repose, forme une corde au niveau d'une circonférence transversale par rapport à l'axe de rotation (a) centrée sur ledit axe de rotation.

4. Bande de freinage selon une quelconque revendication précédente, dans laquelle ledit bord externe de disque circonscrit par ladite ligne de bord de disque (16) fermée comprend au moins deux évidements de bord externe entrant dans ledit volume de freinage.

5. Bande de freinage selon la revendication 4, dans laquelle lesdits au moins deux évidements sont à équidistance l'un de l'autre.

6. Bande de freinage selon une quelconque revendication précédente, dans laquelle ledit au moins un évidement externe est prévu sur lesdites première ou seconde lignes de premier ou second bords externes desdites première ou secondes surfaces de freinage.

7. Bande de freinage selon une quelconque revendication précédente, dans laquelle ladite surface comprend deux plaques, l'espace entre les plaques définissant un conduit de ventilation (22), lesdites plaques étant raccordées par des moyens de raccordement (23) passant à travers ledit conduit de ventilation et dans laquelle ledit au moins un évidement externe implique uniquement le bord radialement externe d'au moins une plaque.

8. Disque de freinage d'un disque de frein comprenant une bande de freinage selon une quelconque revendication précédente et comprenant une cloche de raccordement dudit disque à un moyeu de roue d'une suspension de véhicule, dans lequel ladite cloche fait partie intégrante dudit disque.

9. Procédé pour fabriquer une bande de freinage, comprenant les étapes suivantes :
- la fourniture d'un corps (2) présentant un axe de rotation (a) préétabli, ledit corps présentant une extension dans les directions axiale et radiale par rapport audit axe de rotation ;
- la retenue dudit corps dans la direction axiale au moyen d'une première surface de freinage (3) adaptée pour être frottée par une plaquette de frein, afin d'exercer une action de freinage sur un véhicule et
- la retenue dudit corps dans la direction axiale au moyen d'une seconde surface de freinage (4), opposée à la première dans la direction axiale, et adaptée pour être frottée par une plaquette de frein, afin d'exercer une action de freinage sur un véhicule ;
- la retenue axiale d'un volume de freinage (5) dudit corps au moyen desdites surfaces de freinage (3, 4) opposées ;
- la création d'un premier bord radialement interne (6) dans ladite première surface de freinage qui définit radialement ladite surface sur le côté d'axe de rotation, ledit premier bord interne étant inscrit par une première ligne de bord interne (7) qui est fermée et reposant sur une circonférence avec un rayon (R1i) d'une dimension préétablie ;
- la création d'un premier bord radialement externe (8) dans ladite première surface de freinage qui définit radialement ladite surface sur le côté opposé à l'axe de rotation, ledit premier bord externe étant circonscrit par une première ligne de bord externe (9) fermée ;
- la création d'un second bord radialement interne (10) dans ladite seconde surface de freinage qui définit radialement ladite surface sur le côté d'axe de rotation, ledit second bord interne étant inscrit par une seconde ligne de bord interne (11) qui est fermée et reposant sur une circonférence avec un rayon (R2i) d'une dimension préétablie ;
- la création d'un second bord radialement externe (12) dans ladite seconde surface de freinage qui définit radialement ladite surface sur le côté opposé à l'axe de rotation, ledit second bord externe étant circonscrit par une seconde ligne de bord externe (13) fermée ;
- la création d'un bord externe de disque (14) qui définit radialement ledit disque sur le côté opposé audit axe de rotation comprenant lesdits premier et second bords externes ;
- la création, dans au moins une partie axiale (15) dudit bord externe de disque, circonscrit par une ligne de bord de disque (16) fermée, d'au moins une partie angulaire (A, B, C, D) qui est évidée radialement en direction de l'axe de rotation pour former un évidement externe de bord (17) entrant dans ledit volume de freinage ;
- au moins deux parties axiales de bord externe de disque (15, 18) sont créées, chacune formant au moins un évidement de bord externe (17, 19) ;
- lesdites deux parties axiales de bord externe de disque (15, 18) sont créées de manière espacée axialement l'une de l'autre ;
**caractérisé en ce qu'**il comprend l'étape supplémentaire suivante :
les évidements de bord externe (17, 19) prévus dans les bords radialement externes des surfaces de freinage (3, 4) sont créés dans les surfaces de freinage (3, 4) opposées et sont créés de manière décalée angulairement l'un de l'autre dans une direction circonférentielle par rapport à la bande de freinage, de manière à ne pas se chevaucher complètement mutuellement dans la direction axiale.

10. Procédé selon la revendication 9, dans lequel ledit évidement radial est obtenu par fraisage.

11. Procédé selon la revendication 9 ou 10, dans lequel ladite bande de freinage est ventilée dans au moins une des surfaces de freinage de celle-ci, par perçage d'au moins un trou borgne ou débouchant dans ladite au moins une surface de freinage.

12. Procédé selon la revendication 9, dans lequel ledit évidement radial est obtenu par nivellement.
